(19) Europäisches Patentamt
European Patent Office
Office européen des brevets

(11) **EP 2 246 158 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(51) Int Cl.:
**B25J 9/16** *(2006.01)* **A63G 31/16** *(2006.01)*

(21) Anmeldenummer: **10003622.7**

(22) Anmeldetag: **31.03.2010**

(54) **Bewegung eines Menschen durch einen Manipulator**

Movement of a person using a manipulator

Déplacement d'un humain par un manipulateur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009 DE 102009019633**

(43) Veröffentlichungstag der Anmeldung:
**03.11.2010 Patentblatt 2010/44**

(73) Patentinhaber: **KUKA Laboratories GmbH**
**86165 Augsburg (DE)**

(72) Erfinder: **Hasenzahl, Torsten**
**89407 Dillingen (DE)**

(74) Vertreter: **Schlotter, Alexander Carolus Paul et al**
**Wallinger Ricker Schlotter Tostmann**
**Patent- und Rechtsanwälte**
**Zweibrückenstrasse 5-7**
**80331 München (DE)**

(56) Entgegenhaltungen:
**WO-A1-97/20280 US-A- 4 431 182**

- **LORENZO POLLINI ET AL: "Novel Motion Platform for Flight Simulators Using an Anthropomorphic Robot", JOURNAL OF AEROSPACE COMPUTING, INFORMATION, AND COMMUNICATION, Bd. 5, Nr. 7, 1. Juli 2008 (2008-07-01), Seiten 175-196, XP055057267, ISSN: 1542-9423, DOI: 10.2514/1.28675**
- **KUKA: "SPECIFICATION/SPEZIFIKATION ROBOCOASTER", INTERNET CITATION, 7. Februar 2003 (2003-02-07), XP007900271, Gefunden im Internet: URL:http://www.kuka.com/NR/rdonlyres/6AEE2 444- CD93-46ED-AEB8-03551A8CCDDC/0/spez_rob ocoaster.pdf [gefunden am 2003-02-07]**
- **KOEPPE R ET AL: "Robot-Robot and Human- Robot Cooperation in Commercial Robotics Applications", SPRINGER TRACTS IN ADVANCED ROBOTICS, BERLIN ; HEIDELBERG ; NEW YORK : SPRINGER, 2003-, DE, Bd. 15, 1. Januar 2005 (2005-01-01), Seiten 202-216, XP008160923, ISSN: 1610-7438, DOI: 10.1007/11008941_22**

**Beschreibung**

Die vorliegende Erfindung betrifft die Bewegung eines Menschen durch einen Manipulator, insbesondere einen Roboter.

Beispielsweise aus der EP 1 289 616 B1 der Anmelderin ist es bekannt, Menschen durch Roboter zu bewegen. Hierzu trägt der Roboter eine Fahrgast-Aufnahme und bewegt diese entsprechend einer vorab geplanten oder während der Bewegung, insbesondere durch den Fahrgast, generierten Bahn. Neben industriellen Anwendungen, bei denen der Mensch durch den Roboter in bestimmte Arbeits-, beispielsweise Montagepositionen, gebracht wird, stellt insbesondere der Entertainmentbereich eine vorteilhafte Einsatzmöglichkeit dar, in der Roboter herkömmliche Fahrgeschäfte ersetzen oder ergänzen können.

Bei solchen Fahrgeschäften sind teilweise hohe Beschleunigungen erwünscht, um das Gleichgewichtsgefühl der Fahrgäste zu reizen. Auf der anderen Seite muss sichergestellt werden, dass zulässige maximale Beschleunigungswerte nicht überschritten werden.

Nach betriebsinterner Praxis wird dies durch eine entsprechende Begrenzung der Antriebsleistungen und Wahl der Getriebeübersetzungen realisiert, so dass selbst in ungünstigsten Posen des Roboters bei maximalen Motormomenten ein zulässiger maximaler Beschleunigungswert nicht überschritten wird.

Die EP 1 289 616 B1 schlägt eine nicht näher spezifizierte Sicherheitseinrichtung zur Begrenzung einer Beschleunigungskraft vor.

Die WO 97/20280 A1 betrifft eine virtuelle Bewegungsprogrammierung und Steuerung. Ein Ziel dabei ist es, generische Bewegungsbeschreibungen so zu verarbeiten, dass diese auf einer Bewegungsplattform, wie sie im Erlebnisparks eingesetzt werden, ausgeführt werden können. Dabei ist eine Schwierigkeit, virtuelle generische Bewegungen, welche idealisiert ohne Bewegungsbeschränkungen sind, in Bewegungen zu transformieren, welche auf der Bewegungsplattform ausgeführt werden können, wobei diese in ihren Bewegungen beschränkt ist. Durch diese Transformation soll der Eindruck der idealen Bewegung jedoch beibehalten werden.

Die US 4,431,182 betrifft ein Fahrgeschäft zur Erzeugung eines Freifall-Erlebnisses. Ziel ist es, einem Passagier das Erlebnis der Schwerelosigkeit zu verschaffen. Dazu werden verschiedene Vorrichtungen zur Beschleunigungserzeugung vorgeschlagen. Dabei sitzt der Passagier in einer Kapsel, die an einem Arm befestigt ist. Der Arm ist durch weitere mechanische Mittel insbesondere dafür eingerichtet ein vertikales Freifall-Erlebnis zu erzeugen oder eine Art Parabelflug.

Diese Lösungen sind in verschiedener Hinsicht noch nicht optimal. Aufgabe der vorliegenden Erfindung ist es daher, die Bewegung eines Menschen durch einen Manipulator, insbesondere im Entertainmentbereich, zu verbessern.

Diese Aufgabe wird durch ein Verfahren mit den Merkmalen des Anspruchs 1 gelöst. Anspruch 9 stellt einen Manipulator, Anspruch 11 bzw. 12 ein Computerprogramm bzw. ein Computerprogrammprodukt, insbesondere ein Speichermedium oder einen Datenträger, zur Durchführung eines Verfahrens nach Anspruch 1 unter Schutz. Die Unteransprüche betreffen vorteilhafte Weiterbildungen.

Ein erfindungsgemäßer Manipulator kann insbesondere als Roboter ausgebildet sein, der eine oder mehrere, vorzugsweise wenigstens sechs Bewegungsachsen aufweist, insbesondere Dreh- und/oder Linearachsen, beispielsweise ein Knickarm-, Portal- oder Scararoboter, eine Linearachse oder ein auf einer beweglichen Plattform montierten Roboter. Er weist eine Fahrgast-Aufnahme für eine oder mehrere Personen, beispielsweise einen Sitz, eine Sitzbank, ein Hängegestell oder -gurt, eine Standplattform oder dergleichen, sowie Aktuatoren zur Bewegung der Fahrgast-Aufnahme auf, beispielsweise Elektromotoren, die auf Bewegungsachsen des Manipulators wirken.

Eine abzufahrende Bahn bzw. Trajektorie kann vorab, beispielsweise mittels einer offline-Bahnplanung, oder, wenigstens abschnittsweise, während des Betriebs generiert werden, zum Beispiel durch einen Interpolator auf Basis von Stützstellen, die ihrerseits vorab gespeichert oder durch einen Fahrgast, einen Bediener oder eine Manipulatorsteuerung vorgegebenen werden, beispielsweise auf Basis der Positionen von Hindernissen wie anderen Manipulatoren oder dergleichen. Als Bahn bzw. Trajektorie wird dabei insbesondere eine Folge $(r(s_i), \Psi(s_i))$ i=0,1,... von Positionen, d.h. Lagen, zum Beispiel kartesischen Koordinaten $r$ = (x, y, z), und/oder Orientierungen, zum Beispiel EULER- oder KARDAN-Winkeln $\Psi$= ($\alpha$, $\beta$, $\gamma$), bzw. eine Folge von zugehörigen Gelenkstellungen des Manipulators bezeichnet. Als Bewegung wird dementsprechend insbesondere das Abfahren einer Trajektorie in der Zeit bezeichnet, beispielsweise ein Verlauf $(r(t), \Psi(t))$ bzw. ein Bahnprofil s(t).

Erfindungsgemäß wird für die Bewegung der Fahrgast-Aufnahme eine Beschleunigungsgröße bestimmt. Diese Beschleunigungsgröße kann insbesondere einen Beschleunigungswert umfassen, beispielsweise den Betrag $\left|\dfrac{d^2 r}{dt^2}\right|$ der Beschleunigung eines Referenzpunktes der Fahrgast-Aufnahme oder dessen Komponente in eine vorgegebene Richtung, beispielsweise senkrecht zur Fahrgast-Aufnahme, d.h. in einem Relativsystem der Fahrgast-Aufnahme nach oben/unten, vorne/hinten bzw. links/rechts. Insbesondere dann kann der Beschleunigungswert vorzeichenbehaftet sein, da beispielsweise sogenannte negative, insbesondere kraniale bzw. posteriore Beschleunigungen, d.h. in einem Bezugssystem des Fahrgastes nach oben bzw. hinten, schlechter ertragen werden als positive Beschleunigungen, insbesondere kaudale bzw. anteriore Beschleunigungen, d.h. im Bezugssystem des Fahrgastes nach unten bzw. vorne.

Beschleunigungswerte können mit der Erdbeschleunigung g ≈ 9,81 m/s$^2$ normiert sein und stellen dann die einwirkenden g-Kräfte dar. Dabei können die entsprechenden Komponenten der Erdbeschleunigung berücksichtigt werden, die zusammen mit den Beschleunigungen relativ zu einem erdfesten Inertialsystem die auf den Fahrgast einwirkenden Trägheitskräfte und somit dessen Sinneseindrücke und Fahrgefühl bestimmen. Wird beispielsweise ein Fahrgast mit 1g gegen die Gravitationsrichtung beschleunigt, heben sich Erdbeschleunigung und Beschleunigung relativ zum Inertialsystem auf, auf den subjektiv schwerelosen Fahrgast wirken keine g-Kräfte.

Zusätzlich kann die Beschleunigungsgröße eine Beschleunigungsdauer umfassen. Denn unterschiedlich hohe g-Kräfte dürfen physiologisch für unterschiedliche Zeitdauern auftreten: während beispielsweise 10g bereits unter einer Sekunde regelmäßig zum Blackout führen, dürfen nach einer einschlägigen Norm 6g für 1,0s, 4g hingegen für 2s auftreten.

Nach einem ersten Aspekt der vorliegenden Erfindung wird die erwartete Beschleunigungsgröße der Bewegung vor Ausführen dieser Bewegung bestimmt bzw. abgeschätzt und dann mit einer vorgegebenen Beschleunigungsgröße verglichen.

Hierzu kann beispielsweise auf Basis einer aktuell gemessenen Position und/oder Bewegungsrichtung, einer geplanten Trajektorie, Antriebskräften, -momenten bzw. - leistungen der Aktuatoren, einer Pose und/oder Trägheit des Manipulators und dergleichen eine Beschleunigung eines Referenzsystems der Fahrgast-Aufnahme für einen nachfolgenden Bahnabschnitt, zum Beispiel einen oder mehrere folgende Zeittakte einer Manipulatorsteuerung, nach Größe, Richtung und/oder Dauer ermittelt werden.

Vorteilhaft können so eine drohende Überschreitung zulässiger Grenzwerte für die Beschleunigungsgröße bereits im Vorfeld erkannt und entsprechende Maßnahmen ergriffen werden. Beispielsweise kann der Manipulator längs einer vorgegebenen Trajektorie langsamer verfahren, eine vorab geplante T(eil)Trajektorie umgeplant oder der Manipulator sanfter stillgesetzt werden. Zusätzlich oder alternativ ist es auch möglich, die auftretende Beschleunigungsgröße während der Bewegung zu bestimmen.

Nach einem zweiten Aspekt der vorliegenden Erfindung, der insbesondere mit dem vorstehend erläuterten ersten Aspekt kombiniert sein kann, umfasst eine vorgegebene Beschleunigungsgröße verschiedene zulässige Beschleunigungsdauern, die unterschiedlichen Beschleunigungswerten zugeordnet sind.

Nach betriebsinterner Praxis wird der Manipulator stillgesetzt, wenn Beschleunigungswerte länger als eine maximal zulässige Zeit außerhalb eines Toleranzbandes um die Referenzwerte liegen. Diese maximal zulässige Zeit ist jedoch stets gleich lang. Doch wie vorstehend ausgeführt, sind unterschiedliche Beschleunigungen physiologisch unterschiedlich lange ertragbar. In manchen einschlägigen Normen sind daher unterschiedliche maximale Zeitdauern für verschiedene Beschleunigungswerte vorgegeben.

Dem trägt der zweite Aspekt der vorliegenden Erfindung Rechnung, indem die vorgegebene Beschleunigungsgröße, mit der eine Beschleunigungsgröße verglichen wird, die beispielsweise mittels eines oder mehrerer Beschleunigungssensoren gemessen, für den aktuellen Zeitpunkt, beispielsweise aus erfassten Gelenkpositionen, -geschwindigkeiten und/oder -beschleunigungen in den Bewegungsachsen des Manipulators, ermittelt, oder nach dem vorstehend erläuterten ersten Aspekt vor Ausführen der Bewegung bestimmt wird, verschiedene zulässige Beschleunigungsdauern umfasst, die jeweils einem anderen zulässigen Beschleunigungswert zugeordnet sind.

So kann beispielsweise eine geeignete Maßnahme ergriffen werden, beispielsweise der Manipulator längs einer vorgegebenen Trajektorie langsamer verfahren, eine vorab geplante Trajektorie umgeplant oder der Manipulator sanfter stillgesetzt werden, wenn ein vorab oder während der Bewegung bestimmter Beschleunigungswert einen ersten Schwell- bzw. Grenzwert für eine erste vorgegebene maximale Beschleunigungsdauer überschreitet oder einen zweiten Schwell- bzw. Grenzwert, der beispielsweise kleiner als der erste Grenzwert sein kann, für eine zweite vorgegebene maximale Beschleunigungsdauer überschreitet, die dann vorzugsweise länger als die erste vorgegebene maximale Beschleunigungsdauer ist.

In einer bevorzugten Ausführung dieses Aspektes ist die Berücksichtigung bzw, Einhaltung verschiedener Beschleunigungskollektive und die geeignete Verknüpfung unterschiedlicher Schwellwerte und zugeordneter Beschleunigungsdauern möglich. So kann beispielsweise jedes Mal, wenn ein Schwellwert überschritten wird, eine Funktion, insbesondere ein Timer, initialisiert werden, die prüft, ob der Beschleunigungswert innerhalb der zugeordneten zulässigen Beschleunigungsdauer wieder unter den Schwellwert fällt. Mehrere Schwellwerte können etwa durch Überwachung verschiedener Funktionen oder Neuaufsetzen mit entsprechender Verkürzung der überwachten Beschleunigungsdauer berücksichtigt werden. Es kann auch die Häufigkeit und/oder Korrelation der Schwellwertüberschreitungen berücksichtigt werden.

Nach einem dritten Aspekt der vorliegenden Erfindung, der insbesondere mit dem vorstehend erläuterten ersten und/oder zweiten Aspekt kombiniert sein kann, wird die Bewegung an eine vorgegebene Beschleunigungsgröße angepasst, falls die bestimmte Beschleunigungsgröße von der vorgegebenen Beschleunigungsgröße abweicht.

Während bei der bekannten betriebsinternen Praxis durch die Begrenzung der Antriebsleistungen vorgegebene, insbesondere maximal zulässige Beschleunigungen regelmäßig nicht oder nur kürzer als gewünscht auftreten, was insbesondere im Entertainmentbereich unerwünscht ist, kann durch die erfindungsgemäße Anpassung der Bewegung an eine vorgegebene Beschleunigungsgröße das Potential des Manipulators besser ausgeschöpft werden. Im Gegensatz zu bisheriger betriebsinterner Praxis wird der Manipulator jedoch nicht zwingend stillgesetzt, wenn die bestimmte Beschleunigungsgröße von der vorgegebenen Beschleunigungsgröße abweicht. Vielmehr kann eine vorgegebenen Trajektorie beispielsweise langsamer oder schneller abgefahren oder eine vorab geplante Trajektorie wenigstens teilweise umgeplant werden.

Hierzu wird zunächst wenigstens eine Beschleunigungsgröße bestimmt, beispielsweise für einen aktuellen Zeitpunkt mittels eines oder mehrerer Beschleunigungssensoren gemessen oder, beispielsweise aus erfassten Gelenkpositionen, -geschwindigkeiten und/oder -beschleunigungen in den Bewegungsachsen des Manipulators, ermittelt, und/oder für wenigstens einen späteren Zeitpunkt nach dem erläuterten ersten Aspekt vor Ausführen der Bewegung bestimmt.

Dann werden die Beschleunigungsgröße(n) mit vorgegebene(n) Beschleunigungsgröße(n) verglichen. Beispielsweise kann festgestellt werden, ob aktuell oder voraussichtlich zu einem späteren Zeitpunkt beim geplanten Abfahren einer Trajektorie ein maximal zulässiger Beschleunigungswert überschritten wird. Vorzugsweise können dabei nach dem zweiten Aspekt auch unterschiedliche maximal zulässige Beschleunigungsdauern berücksichtigt werden, während denen verschiedene Beschleunigungswertstufen erreicht oder überschritten werden dürfen.

Falls eine oder mehrere bestimmte Beschleunigungsgrößen zu sehr von einer vorgegebenen Beschleunigungsgröße abweichen, wird die Bewegung des Manipulators an die vorgegebene Beschleunigungsgröße angepasst.

Dies kann insbesondere dadurch erfolgen, dass die Bewegung auf Basis der bestimmten Beschleunigungsgröße geregelt wird, um sie an die vorgegebene Beschleunigungsgröße anzupassen. Beispielsweise kann eine vorgegebene Trajektorie langsamer oder schneller abgefahren werden. Insbesondere kann beispielsweise ein Bahnprofil $s = s(t)$ derart vorgegeben oder geändert werden, dass sich bei Abfahren der vorgegebenen Trajektorie $(r(s_i), \Psi(s_i))$ i=0,1,... mit diesem Zeitprofil $s(t)$ im Wesentlichen stets ein vorgegebener Betrag $\left|\dfrac{d^2 r}{dt^2}\right|_{soll}$ der Beschleunigung eines Referenzpunktes der Fahrgast-Aufnahme ergibt:

$$\left|\frac{d^2 r}{dt^2}\right| = \left|\frac{\partial r}{\partial s} \cdot \left(\frac{ds}{dt}\right)^2 + \frac{\partial r}{\partial s} \cdot \frac{d^2 s}{dt^2}\right| = \left|\frac{d^2 r}{dt^2}\right|_{soll} \Rightarrow s(t)$$

Dies kann gleichermaßen zu einem langsameren, aber auch zu einem schnelleren Abfahren der Trajektorie führen. Überschreitet beispielsweise eine g-Kraft einen Grenzwert, so wird die Trajektorie vorzugsweise gerade so langsam abgefahren, dass die g-Kraft bis auf diesen Grenzwert reduziert wird. Wird der Grenzwert dabei für die ihm zugeordnete maximal zulässige Beschleunigungsdauer erreicht, kann die g-Kraft bis auf einen niedrigeren Grenzwert mit entsprechend längerer maximal zulässiger Beschleunigungsdauer reduziert werden.

Um insbesondere im Entertainmentbereich gewünschte Sinneseindrücke zu vermitteln, kann umgekehrt bei Unterschreiten einer vorgegebenen g-Kraft die Trajektorie gerade so schnell abgefahren werden, dass die g-Kraft bis auf diesen Grenzwert erhöht wird. Vorzugsweise kann durch Vorgeben einer Unter- und einer Obergrenze für eine Beschleunigungsgröße ein Toleranzband vorgegeben werden, innerhalb dessen die Trajektorie abgefahren werden darf bzw. soll.

Gleichermaßen kann beispielsweise eine vorab geplante Trajektorie umgeplant werden, um eine entsprechende Reduzierung bzw. Erhöhung der bei ihrem Abfahren auftretenden g-Kräfte zu erreichen. So können beispielsweise Richtungsänderungen verschärft, etwa Kurvenradien verkleinert, oder entschärft, zum Beispiel Kurvenradien entsprechend vergrößert werden, so dass die auftretenden Zentripetal-, Bahn- und Coriolisbeschleunigungen, gegebenenfalls unter Berücksichtigung der Erdbeschleunigung, die vorgegebene Beschleunigungsgröße ergeben.

Weitere Vorteile und Merkmale ergeben sich aus den Unteransprüchen und den Ausführungsbeispielen. Hierzu zeigt, teilweise schematisiert:

Fig. 1:     einen Roboter mit Fahrgast-Aufnahme nach einer Ausführung der vorliegenden Erfindung; und

Fig. 2:     Bahnparameter- und zugehörige Beschleunigungswertprofile über der Zeit.

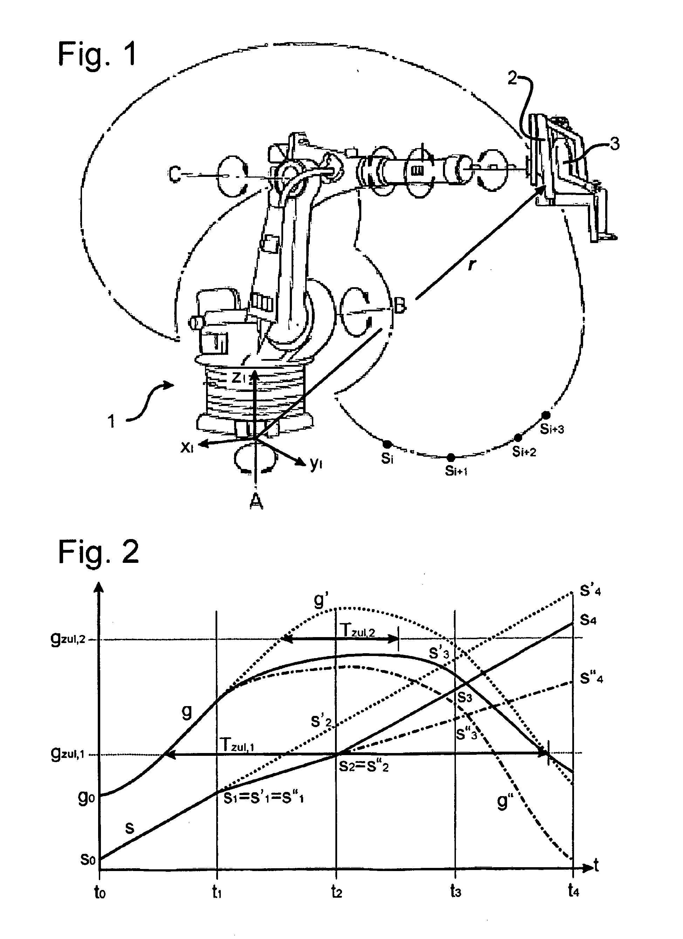

Fig. 1 zeigt einen sechsachsigen Knickarmroboter 1, an dessen Werkzeugflansch eine Fahrgast-Aufnahme 2 für einen Menschen 3 befestigt ist, um diesen auf einer strichpunktiert eingezeichneten Trajektorie bzw. Bahn zu bewegen. Diese Bahn kann beispielsweise durch den Ortsvektor **r** eines Referenzkoordinatensystems der Fahrgast-Aufnahme 2 und dessen Orientierung $\Psi$ relativ zu einem basisfesten Koordinatensystem $\{x_l, y_l, z_l,\}$ beschrieben und hierzu als Folge von Stützstellen $s_i \to (r(s_i), \Psi(s_i))$ vorgegeben werden. In Fig. 1 sind exemplarisch vier Stützstellen $s_i$, $s_i+1$, $s_{i+2}$, $s_{i+3}$ eingezeichnet, die eine Diskretisierung eines Bahnparameters $s \to r(s)$ darstellen.

Beim Abfahren der Bahn plant ein Interpolator der Robotersteuerung Teilabschnitte zwischen der aktuellen und einer oder mehreren darauffolgenden Stützstellen, beispielweise als Point-to-Point ("PTP")- oder Kreissegment-("CR") Bahn. Die Robotersteuerung regelt dann Antriebsmotoren des Roboters 1 so, dass die Fahrgast-Aufnahme 2 die gewünschte Bahn, i.e. die Stützstellen abfährt. Wann dabei die einzelnen Stützstellen $s_i$, $s_i+1$,... erreicht werden, hängt unter anderem von der Vorgabe des Interpolators, der Robotersteuerung und der Antriebsleistung der Motoren des Roboters 1 ab.

Fig. 2 zeigt den Verlauf des Bahnparameters s(t) und der Beschleunigung g(t) über der Zeit t mit fünf diskreten Zeitpunkten $t_0$, $t_1$,... entsprechend einer Taktung des Interpolators.

Zum Zeitpunkt $t_0$ erfassen Beschleunigungsaufnehmer in der Fahrgast-Aufnahme 2 die auf den Fahrgast 3 einwirkende absolute Beschleunigung als Beschleunigungswert $g_0$. Der Interpolator plant zunächst das Anfahren der nächsten Stützstellen für die folgenden Zeittakte $[t_0, t_1]$, $[t_1, t_2]$, $[t_2, t_3]$ mit einer konstanten Bahngeschwindigkeit s'(t), die in Fig. 2 punktiert eingezeichnet ist. Dabei würde die Fahrgast-Aufnahme 2 zum Zeitpunkt $t_1$ die Stelle $s'_1$ auf der in Fig. 1 strichpunktiert eingezeichneten Trajektorie erreichen, zum Zeitpunkt $t_2$ die Stelle $s'_2$ etc.

In der Robotersteuerung ist eine Überwachungsfunktion implementiert, welche auf Basis der kinematischen Parameter (beispielsweise der Achsabstände, der Soll-Trajektorie ($r(s_i)$, $\Psi(s_i)$)) und der Trägheitsparameter (zum Beispiel Massen, Schwerpunktlagen, Trägheitstensoren), die teilweise vorab bekannt sein, teilweise abgeschätzt oder zu Beginn der Bewegung, beispielsweise auf Basis der auftretenden Antriebskräfte und -momente, identifiziert werden können, eine Beschleunigungsgröße, nämlich einen Beschleunigungswert g', beispielsweise den Betrag des zweifach nach der Zeit differenzierten Ortsvektors **r** unter Berücksichtigung der Erdbeschleunigung, sowie die Beschleunigungsdauer T bestimmt, während der dieser Beschleunigungswert auf den Fahrgast 3 einwirkt, wenn die Soll-Trajektorie mit der geplanten Bahnprofil s'(t) abgefahren würde.

Im Ausführungsbeispiel stellt diese Überwachungsfunktion fest, dass beim Abfahren dieses Bahnprofil s'(t) innerhalb des im Interpolator überwachten Zeithorizonts $[t_0, t_3]$ ein erster Beschleunigungsschwellwert $g_{zul, 1}$ und ein zweiter, höherer Beschleunigungsschwellwert $g_{zul, 2}$ überschritten würde.

Jedem dieser Beschleunigungsschwellwerte $g_{zul, i}$ (i=1, 2) ist eine zulässige maximale Beschleunigungsdauer $T_{zul, i}$ zugeordnet, die angibt, wie lange der jeweilige Beschleunigungsschwellwert maximal kontinuierlich überschritten werden darf. Nach einer einschlägigen Norm können die Werte beispielsweise $g_{zul, 1} = 4g$, $T_{zul, 1} = 2s$, $g_{zul, 2} = 6g$, $T_{zul, 2} = 1$ s lauten. Die zulässigen maximalen Beschleunigungsdauer $T_{zul, i}$ sind in Fig. 2 mit Überschreiten des jeweiligen Beschleunigungsschwellwertes $g_{zul, i}$ angetragen.

Wie hieraus ersichtlich, stellt der Interpolator bei der Bahnplanung zum Zeitpunkt $t_0$ bereits vorab fest, dass mit dem geplanten Bahnprofil s'(t) zu einem späteren Zeitpunkt zwischen $[t_2, t_3]$ die für diese Bewegung vorab bestimmte Beschleunigungsgröße, nämlich die dem Beschleunigungswert g' zugeordnete Beschleunigungsdauer, eine vorgegebene Beschleunigungsgröße, nämlich die dem zweiten Beschleunigungsschwellwert $g_{zul, 2}$ zugeordnete zulässige maximale Beschleunigungsdauer $T_{zul, 2}$ überschritte, d.h. der Fahrgast 3 bei dieser Bewegung zu lange einer zu hohen Beschleunigung ausgesetzt wäre.

Daher passt der Interpolator die Bewegung an die vorgegebene Beschleunigungsgröße an, indem er beispielsweise die Trajektorie langsamer abfährt, d.h. ein Bahnprofil s"(t) wählt, das in Fig. 2 strichpunktiert eingezeichnet ist. Man erkennt, dass nach diesem Profil zu einem Zeitpunkt $t_i$ (i=1,2,3) jeweils eine Stelle $s"_i$ auf der in Fig. 1 strichpunktiert eingezeichneten Trajektorie erreicht wird, die in Durchlaufrichtung vor der entsprechenden Stelle $s'_i$ nach dem ursprüngliche geplanten Bahnprofil s'(t) liegt bzw. umgekehrt dieselbe Stützstelle erst später erreicht wird.

Dementsprechend verringern sich auch die Beschleunigungswerte und -dauern, wie aus dem zugehörigen, in Fig. 2 ebenfalls strichpunktiert eingezeichneten Verlauf der Beschleunigung g" ersichtlich ist, so dass die zulässige maximale Beschleunigungsdauer $T_{zul, 2}$ nicht mehr überschritten wird.

Im nächsten Zeittakt, d.h. im Zeitpunkt $t_1$ plant der Interpolator erneut das Anfahren der nächsten Stützstellen für die Zeittakte $[t_1, t_2]$, $[t_2, t_3]$ und $[t_3, t_4]$, wie in Fig. 2 strichpunktiert eingezeichnet ist. Hierfür bestimmt die Überwachungsfunktion, wie vorstehend beschrieben, die Beschleunigungsgröße, d.h. Beschleunigungswert g" sowie Beschleunigungsdauer T, wenn die Soll-Trajektorie mit der geplanten Bahnprofil s"(t) abgefahren würde.

Dabei stellt die Überwachungsfunktion fest, dass beim Abfahren des Bahnprofil s"(t) innerhalb des im Interpolator überwachten Zeithorizonts $[t_1, t_4]$ auch die dem niedrigeren Beschleunigungsschwellwert $g_{zul, 1}$ zugeordnete zulässige maximale Beschleunigungsdauer $T_{zul, 1}$ nicht mehr ausgenutzt würde.

Daher passt der Interpolator die Bewegung an die vorgegebene Beschleunigungsgröße an, indem er die Trajektorie in diesem Abschnitt schneller abfährt, d.h. ein Bahnprofil s(t) wählt, das in Fig. 2 ausgezogen eingezeichnet ist.

Man erkennt, dass sich nach diesem Profil die Beschleunigungswerte und -dauern, wie aus dem zugehörigen, in Fig. 2 ebenfalls ausgezogen eingezeichneten Verlauf der Beschleunigung g ersichtlich ist, wieder erhöhen, so dass die zulässige maximale Beschleunigungsdauer $T_{zul, 1}$ ausgenutzt wird.

Durch die Vorabbestimmung der Beschleunigungsgrößen g, T vor Abfahren des entsprechenden Trajektorienabschnittes, die Berücksichtigung unterschiedlicher zulässiger Beschleunigungsdauern $T_{zul, i}$, und die Anpassung der Bewegung s'→s" →s an die vorgegebene Beschleunigungsgröße kann so einerseits sichergestellt werden, dass der Fahrgast 3 nicht zu lange zu hohen Belastungen ausgesetzt wird. Auf der anderer Seite kann durch Ausnutzen der zulässigen Beschleunigungskollektive ein maximaler Fahrspaß gewährleistet werden.

Während im Ausführungsbeispiel die Trajektorie als solche unverändert bleibt und der Interpolator nur das Bahnprofil s(t) geeignet anpasst, kann in einer nicht dargestellten Abwandlung der Interpolator auch die Interpolationsart zwischen den Stützstellen wechseln, weitere (Hilfs)Stützstellen einfügen und/oder die Stützstellen selber verändern. Beispielsweise kann er durch den Übergang von einer im Arbeitsraum stückweise geraden PTP-Bahn zu überschleifenden CR-Bahnabschnitten die Beschleunigungen in den Übergängen verringern bzw. durch Zentrifugal- und Coriolisanteile innerhalb der Abschnitte erhöhen.

Man erkennt insbesondere aus Fig. 2 auch, dass in Abwandlung des vorstehend beschriebenen Ausführungsbeispiels die gewünschte Bewegung auch dadurch erreicht werden kann, dass beispielsweise das Überschreiten eines Beschleunigungsschwellwertes für höchstens eine zugeordnete zulässige Beschleunigungsdauer als (positives) Gütekriterium oder Verstärkungsglied und/oder das zu lange Überschreiten eines Beschleunigungsschwellwertes über eine zugeordnete zulässige Beschleunigungsdauer hinaus als (negative) Straffunktion oder negative Rückkoppelung in einem Regelalgorithmus berücksichtigt wird, der zum Beispiel in der Robotersteuerung implementiert sein kann. Ein entsprechender Regler wird demnach die Bewegung so steuern, dass einerseits die zulässigen Beschleunigungen ausgenutzt werden, um den Fahrspaß zu erhöhen, und andererseits verhindern, dass Fahrgäste zu lange zu hohen Beschleunigungen ausgesetzt werden. In Verallgemeinerung dieser Ausführungsform wird die Bewegung vorzugsweise, wenigstens auch, auf Basis einer bestimmten Beschleunigungsgröße geregelt, um diese an eine vorgegebene Beschleunigungsgröße anzupassen. Unter einer Regelung wird dabei eine Vorgabe von Stellgrößen mit oder ohne Rückführung von Istgrößen und deren Vergleich mit Sollgrößen verstanden.

Bezugszeichenliste

1   Roboter
2   Fahrgast-Aufnahme
3   Fahrgast

A, B, C   Drehachse
g   Beschleunigung
$s, s_i$   Bahnparameter, Stützstelle
$t, t_i$   Zeit(punkt)

**Patentansprüche**

1.  Verfahren zum Bewegen eines Menschen (3) durch einen Roboter (1), mit den Schritten:

    Bewegen einer Fahrgast-Aufnahme (2) für einen Menschen durch den Roboter; und
    Bestimmen einer Beschleunigungsgröße (g, T) dieser Bewegung ($r$(t), Ψ(t));
    **dadurch gekennzeichnet, dass**
    die Beschleunigungsgröße der Bewegung vor und/oder während der Ausführung dieser Bewegung bestimmt und mit einer vorgegebenen Beschleunigungsgröße ($g_{zul}$, $T_{zul}$) verglichen wird; und
    die Bewegung an eine vorgegebene Beschleunigungsgröße ($g_{ul}$, $T_{zul}$) angepasst wird, falls die bestimmte Beschleunigungsgröße von der vorgegebenen Beschleunigungsgröße abweicht; und
    eine vorgegebene Beschleunigungsgröße verschiedene zulässige Beschleunigungsdauern ($T_{zul, 1}$, $T_{zul, 2}$) umfasst, die jeweils einem zulässigen Beschleunigungswert ($g_{zul, 1}$, $g_{zul, 2}$) zugeordnet sind.

2.  Verfahren nach Anspruch 1, **dadurch gekennzeichnet, dass** die Bewegung auf Basis der bestimmten Beschleunigungsgröße geregelt wird, um sie an eine vorgegebene Beschleunigungsgröße anzupassen.

3. Verfahren nach einem der vorhergehenden Ansprüche, **dadurch gekennzeichnet, dass** eine geplante Bewegung langsamer oder schneller ausgeführt wird, um sie an eine vorgegebene Beschleunigungsgröße anzupassen.

4. Verfahren nach einem der vorhergehenden Ansprüche, **dadurch gekennzeichnet, dass** eine Trajektorie ($r$(s), $\Psi$(s)) der Fahrgast-Aufnahme (2) verändert wird, um die Bewegung an eine vorgegebene Beschleunigungsgröße anzupassen, insbesondere durch Wechsel einer Interpolationsart, Hinzufügen, Entfernen und/oder Verschieben von Stützstellen ($s_i$).

5. Verfahren nach einem der vorhergehenden Ansprüche, **dadurch gekennzeichnet, dass** die Bewegung an eine vorgegebene Beschleunigungsgröße derart angepasst wird, dass ein vorgegebener Beschleunigungswert erreicht wird.

6. Verfahren nach einem der vorhergehenden Ansprüche, **dadurch gekennzeichnet, dass** die Bewegung an eine vorgegebene Beschleunigungsgröße derart angepasst wird, dass ein vorgegebener Beschleunigungsschwellwert höchstens oder im Wesentlichen während einer zugeordnete Beschleunigungsdauer überschritten wird.

7. Verfahren nach einem der vorhergehenden Ansprüche, **dadurch gekennzeichnet, dass** Aktuatoren des Roboters angesteuert werden, um die Bewegung des Roboters an eine vorgegebene Beschleunigungsgröße anzupassen.

8. Verfahren nach einem der vorhergehenden Ansprüche, **dadurch gekennzeichnet, dass** zur Vorabbestimmung einer Beschleunigungsgröße Parameter, insbesondere Trägheitsparameter, während einer vorhergehenden Bewegung identifiziert oder abgeschätzt werden.

9. Roboter (1) mit einer Fahrgast-Aufnahme (2) für einen Menschen (3) und einer Steuervorrichtung zur Steuerung des Roboters, **dadurch gekennzeichnet, dass** die Steuervorrichtung zur Durchführung eines Verfahrens nach einem der vorhergehenden Ansprüche eingerichtet ist.

10. Roboter nach Anspruch 9, **gekennzeichnet durch** eine Bestimmungsvorrichtung zur Bestimmen einer Beschleunigungsgröße einer Bewegung des Roboters.

11. Computerprogramm, dass ein Verfahren nach einem der Ansprüche 1 bis 8 ausführt, wenn es in einer Steuervorrichtung eines Roboters nach Anspruch 9 abläuft.

12. Computerprogrammprodukt mit Programmcode, der auf einem maschinenlesbaren Träger gespeichert ist und ein Computerprogramm nach Anspruch 11 umfasst.

**Claims**

1. A method for moving a human being (3) by a robot (1), comprising the steps:

   moving a passenger carrier (2) for a human being by the robot; and
   determining an acceleration quantity (g, T) of this movement (r(t), $\Psi$(t));
   **characterized in that**
   the acceleration quantity of the movement is determined before and/or during carrying out this movement and compared to a predefined acceleration quantity ($g_{zul}$) $T_{zul}$); and
   the movement is adapted to a predefined acceleration quantity ($g_{zul}$, $T_{zul}$) if the determined acceleration quantity deviates from the predetermined acceleration quantity; and
   a predefined acceleration quantity comprises different admissible acceleration periods ($T_{zul, 1}$, $T_{zul,2}$) that are assigned to an admissible acceleration value ($g_{zul, 1}$, $g_{zul, 2}$), respectively.

2. A method according to claim 1, **characterized in that** the movement is controlled on the basis of the determined acceleration quantity to adapt it to a predefined acceleration quantity.

3. A method according to one of the preceding claims, **characterized in that** a planned movement is carried out slower or faster to adapt it to a predefined acceleration quantity.

4. A method according to one of the preceding claims, **characterized in that** a trajectory (r(s), Ψ(s)) of the passenger carrier (2) is altered to adapt the movement to a predefined acceleration quantity, in particular by switching a kind of interpolation, adding, cancelling and/or shifting of sampling points ($s_i$).

5. A method according to one of the preceding claims, **characterized in that** the movement is adapted to a predefined acceleration quantity such that a predefined acceleration value is obtained.

6. A method according to one of the preceding claims, **characterized in that** the movement is adapted to a predefined acceleration quantity such that a predefined acceleration threshold value is exceeded at most or in principle during an assigned acceleration period.

7. A method according to one of the preceding claims, **characterized in that** actuators of the robot are controlled to adapt the movement of the robot to a predefined acceleration quantity.

8. A method according to one of the preceding claims, **characterized in that** for predetermination of an acceleration quantity parameters, in particular inertia parameters, are identified or estimated during a preceding movement.

9. A robot (1) with a passenger carrier (2) for a human being (3) and a control device for controlling the robot, **characterized in that** the control device is adjusted for carrying out a method according to one of the preceding claims.

10. A robot according to claim 9, **characterized by** a determination device for determining an acceleration quantity of a movement of the robot.

11. A computer program that realizes a method according to one of the claims 1 to 8, if it runs in a control device of a robot according to claim 9.

12. A computer program product with program code that is stored on a machine-readable carrier and that comprises a computer program according to claim 11.

**Revendications**

1. Procédé permettant de déplacer un être humain (3) au moyen d'un robot (1), comprenant les étapes consistant à :

   déplacer un logement (2) pour un être humain au moyen du robot ;
   et
   déterminer une grandeur d'accélération (g, T) de ce déplacement (r(t), (t))
   **caractérisé en ce que**
   la grandeur d'accélération du déplacement est déterminée avant et/ou pendant l'exécution de ce déplacement et comparée à une grandeur d'accélération ($g_{zul}$, $T_{zul}$) et
   le déplacement est adapté à une grandeur d'accélération prédéfinie ($g_{zul}$, $T_{zul}$), si la grandeur d'accélération déterminée est différente de la grandeur d'accélération prédéfinie ; et
   une grandeur d'accélération prédéfinie comprend différentes durées d'accélération admissibles ($T_{zul,\,1}$, $T_{zul,\,2}$), lesquelles sont associées respectivement à une valeur d'accélération admissible ($g_{zul,\,1}$, $g_{zul,\,2}$).

2. Procédé selon la revendication 1, **caractérisé en ce que** le déplacement est régulé sur la base de la grandeur d'accélération déterminée, afin de l'adapter à une grandeur d'accélération prédéfinie.

3. Procédé selon l'une quelconque des revendications précédentes, **caractérisé en ce qu'**un déplacement planifié est exécuté plus lentement ou plus rapidement, afin d'être adapté à une grandeur d'accélération prédéfinie.

4. Procédé selon l'une quelconque des revendications précédentes, **caractérisé en ce qu'**une trajectoire (r(s), ψ(s)) du logement (2) est modifiée afin d'adapter le déplacement à une grandeur d'accélération prédéfinie, en particulier par changement d'un type d'interpolation, ajout, élimination et/ou déplacement de points d'appui ($S_i$).

5. Procédé selon l'une quelconque des revendications précédentes, **caractérisé en ce que** le déplacement est adapté à une grandeur d'accélération prédéfinie, de telle sorte qu'une valeur d'accélération prédéfinie est atteinte.

**6.** Procédé selon l'une quelconque des revendications précédentes, **caractérisé en ce que** le déplacement est adapté à une grandeur d'accélération prédéfinie, de telle sorte qu'une valeur seuil d'accélération prédéfinie est maximale ou dépassée sensiblement pendant une durée d'accélération associée.

**7.** Procédé selon l'une quelconque des revendications précédentes, **caractérisé en ce que** des actionneurs du robot sont commandés afin d'adapter le déplacement du robot à une grandeur d'accélération prédéfinie.

**8.** Procédé selon l'une quelconque des revendications précédentes, **caractérisé en ce que** pour la détermination préalable d'une grandeur d'accélération, des paramètres, en particulier des paramètres d'inertie, sont identifiés ou évalués pendant un déplacement antérieur.

**9.** Robot (1), pourvu d'un logement (2) pour un être humain (3) et d'un dispositif de commande destiné à commander le robot,
**caractérisé en ce que**
le dispositif de commande est conçu pour mettre en oeuvre un procédé selon l'une quelconque des revendications précédentes.

**10.** Robot selon la revendication 9, **caractérisé par** un dispositif de détermination permettant de déterminer une grandeur d'accélération d'un déplacement du robot.

**11.** Programme informatique, **caractérisé en ce qu'**un procédé selon l'une quelconque des revendications 1 à 8 est mis en oeuvre lorsqu'il se déroule dans un dispositif de commande d'un robot selon la revendication 9.

**12.** Produit-programme informatique pourvu d'un code de programme, lequel est mis en mémoire sur un support lisible par ordinateur et comprend un programme informatique selon la revendication 11.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1289616 B1
- WO 9720280 A1
- US 4431182 A